(19) Europäisches Patentamt
European Patent Office
Office européen des brevets

(11) EP 0 980 711 B1

(12) EUROPÄISCHE PATENTSCHRIFT

(45) Veröffentlichungstag und Bekanntmachung des Hinweises auf die Patenterteilung:
**30.06.2004 Patentblatt 2004/27**

(51) Int Cl.7: **B01J 45/00**, C08F 8/00, C08F 212/06

(21) Anmeldenummer: **99115082.2**

(22) Anmeldetag: **05.08.1999**

(54) **Verfahren zur Herstellung von Selektivaustauschern**

Method for preparing selective exchangers

Méthode pour la préparation d'échangeurs sélectifs

(84) Benannte Vertragsstaaten:
**DE FR GB IT**
Benannte Erstreckungsstaaten:
**RO SI**

(30) Priorität: **18.08.1998 DE 19837294**

(43) Veröffentlichungstag der Anmeldung:
**23.02.2000 Patentblatt 2000/08**

(73) Patentinhaber: **Bayer Chemicals AG**
**51368 Leverkusen (DE)**

(72) Erfinder:
- **Lütjens, Holger, Dr.**
  **51065 Köln (DE)**
- **Rall, Klaus, Dr.**
  **51061 Köln (DE)**
- **Ingendoh, Axel, Dr.**
  **51519 Odenthal (DE)**
- **Klipper, Reinhold, Dr.**
  **50933 Köln (DE)**

(56) Entgegenhaltungen:
**DD-A- 79 152** **DD-A- 238 053**
**GB-A- 862 636**

- **DATABASE WPI Section Ch, Week 198526 Derwent Publications Ltd., London, GB; Class A13, AN 1985-156339 XP002123713 & JP 60 088008 A (ASAHI CHEM IND CO LTD), 17. Mai 1985 (1985-05-17)**
- **DATABASE WPI Section Ch, Week 198335 Derwent Publications Ltd., London, GB; Class A13, AN 1983-751191 XP002123714 & RO 81 073 A (COMB CHIM VICTORIA), 30. Januar 1983 (1983-01-30)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 980 711 B1

## Beschreibung

Die vorliegende Erfindung betrifft ein Verfahren zur Herstellung von Selektivaustauschem mit Iminoessigsäure-Einheiten der allgemeinen Formeln (I) und (II)

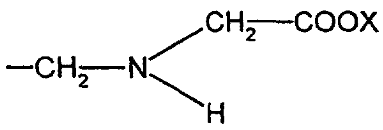

(I)

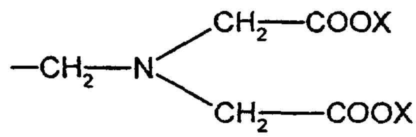

(II)

in welchen

X für Wasserstoff oder ein Alkali-Ion steht,

auf Basis vernetzter Vinylaromat-Polymerisate durch Umsetzung eines primäre Amino-Gruppen tragenden, schwachbasischen Anionenaustauschers mit Monochloressigsäure und/oder einem Alkali-Salz der Monochloressigsäure.

Zur Entfernung von umweltrelevanten Metallionen (z.B. Schwermetallionen) aus alkali- und erdalkalihaltigen Salzlösungen werden Selektivaustauscher eingesetzt. Diese Selektivaustauscher sind dadurch gekennzeichnet, daß ihre aktive Gruppe auf eine bestimmte Metallionenart oder Gruppe von Metallionen unter Bildung eines sogenannten Chelatkomplexes anspricht. Daher ist auch die Bezeichnung Chelataustauscher für die Ionenaustauscher-Gruppe üblich. In der technischen Anwendung haben sich insbesondere Chelatharze mit schwachsauren Iminoessigsäure-Gruppen durchgesetzt, die für eine Reihe von Schwermetallen bzw. Übergangsmetallen eine ausgeprägte Selektivität zeigen.

Das unterschiedliche Schwermetallionen-Bindungsvermögen dieser Chelatharze wird in erster Linie durch ihren unterschiedlichen Gehalt an Iminoessigsäure-Gruppen bewirkt. Die genaue und reproduzierbare Einstellung des Gehaltes an Iminoessigsäure-Gruppen beim Herstellprozeß ist daher für die Produktqualität bezüglich des Schwermetall-Bindungsvermögens sowie der osmotischen Stabilität (Quellungsstabilität) von größter Bedeutung. Zudem hat es sich für einzelne Anwendungsbereiche als vorteilhaft erwiesen, wenn nur ein gewisser Anteil der Gesamtmenge an chelatbildenden Gruppen im Ionenaustauscher aus Iminodiessigsäure-Gruppen und der Rest aus Aminoessigsäure-Gruppen besteht. Zur exakten Einstellung des Iminodiessigsäure-/Aminoessigsäure-Gruppen-Verhältnisses ist ebenfalls ein reproduzierbarer, genau steuerbarer Herstellprozeß erforderlich.

Bekannterweise werden Chelatharze mit Iminoessigsäure-Gruppen u.a. durch Umsetzung von schwachbasischen Anionenaustauschern mit Monochloressigsäure hergestellt (Rudolf Hering, Chelatbildende Ionenaustauscher, Akademie Verlag, Berlin 1967, S. 51 ff). Nachteilig hierbei ist ein zur Erreichung der erforderlichen Umsetzungsgrade verwendeter sehr hoher Überschuß an Monochloressigsäure wegen des geringen Ausnutzungsgrades bezüglich der Monochloressigsäure. Dieser ist nicht nur unwirtschaftlich sondern führt auch zu erhöhten Abwasserbelastungen, insbesondere im Hinblick auf absorbierbare Halogenverbindungen (AOX).

DD 79152 beschreibt die Umsetzung von primäre Aminogruppen tragenden Anionentauschern mit Monochloressigsäure, hierbei wird ausschließlich Iminodiessigsäure gebildet.

Die Aufgabe der vorliegenden Erfindung bestand darin, ein Verfahren zur Herstellung von Selektivaustauschern auf Basis von Iminoessigsäure-Einheiten, mit hohen Umsetzungsgraden an Monochloressigsäure zu entwikkeln, wodurch die oben genannten Nachteile vermieden werden können.

Die Aufgabe wurde dadurch gelöst, daß bei der Umsetzung von schwachbasischen Anionenaustauschern mit Monochloressigsäure und bei Einhaltung spezieller Reaktionsbedingungen Selektivaustauscher oder Chelatharze mit einem reproduzierbaren Gehalt an Iminoessigsäure-Gruppen gekoppelt mit einem optimalen Umsatz bezüglich der Monochloressigsäure erhalten werden können.

Gegenstand der Erfindung ist somit ein Verfahren zur Herstellung von Selektivaustauschem mit Iminoessigsäure-Einheiten der allgemeinen Formeln (I) und (II)

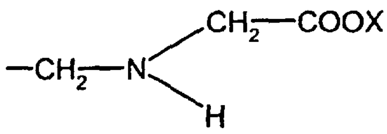

(I)

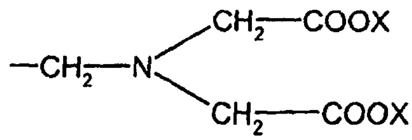

(II)

worin

X für Wasserstoff oder ein Alkali-Ion steht,

auf Basis vernetzter Vinylaromat-Polymerisate durch Umsetzung eines primäre Amino-Gruppen tragenden, schwach basischen Anionenaustauschers mit Monochloressigsäure und/oder einem Alkali-Salz der Monochloressigsäure dadurch gekennzeichnet, daß man die schwach basischen Anionenaustauscher bei 70 bis 110°C und einem pH-Wert von 7 bis 11, vorzugsweise 8 bis 10, reagieren läßt, wobei pro Mol primärer Amino-Gruppen 1,40 bis 2,85 Mol Monochloressigsäure und/oder eines Alkali-Salzes der Monochloressigsäure eingesetzt werden und die Monochloressigsäure und die Natronlauge in einem konstanten Molverhältnis zueinander kontinuierlich zu der Suspension des Eduktes dosiert werden.

Bevorzugt erhält man mit dem erfindungsgemäßen Verfahren Selektivaustauscher mit Iminoessigsäure-Einheiten der allgemeinen Formeln (I) und (II) worin X jeweils für Wasserstoff, Natrium und/oder Kalium steht.

Die den Selektivaustauschern zugrundeliegenden Vinylaromat-Polymerisate sind Polymerisate auf Basis von Vinylaromaten wie Styrol, Vinyltoluol, Ethylstyrol, α-Methylstyrol, Chlorstyrol, o-Chlormethylstyrol, m-Chlormethylstyrol, p-Chlormethylstyrol, Vinylpyridin, Vinylnaphthalin. Es können auch Polymerisate eingesetzt werden, bei deren Herstellung nicht-aromatische Monomere mit einer copolymerisierbaren Doppelbindung pro Molekül mitverwendet werden. Solche Monomere umfassen beispielsweise Acrylsäure, Methacrylsäure, Acrylsäureester, Methacrylsäureester, Acrylnitril, Methacrylnitril, Acrylamid, Methacrylamid, Vinylchlorid, Vinylidenchlorid, Vinylacetat. Die monoethylenisch ungesättigten Monomeren für die Herstellung der Vinylaromat-Polymerisate enthalten vorzugsweise nicht mehr als 10 Gew.-% dieser nicht-aromatischen Monomeren, bezogen auf das Gesamtgewicht der Monomeren.

Die Vinylaromat-Polymerisate sind vemetzt - vorzugsweise durch Copolymerisation mit vernetzenden Monomeren mit mehr als einer, vorzugsweise mit 2 oder 3, copolymerisierbaren C=C-Doppelbindungen pro Molekül. Solche vernetzenden Monomeren umfassen beispielsweise polyfunktionelle Vinylaromaten wie Di- und Trivinylbenzole, Divinylethylbenzol, Divinyltoluol, Divinylxylol, Divinylnaphthalin, polyfunktionelle Allylaromaten wie Di- und Triallylbenzole, polyfunktionelle Vinyl- und Allylheterocyclen wie Trivinyl- und Triallylcyanurat und -isocyanurat, N,N'-$C_1$-$C_6$-Alkylendiacrylamide und -dimethacrylamide wie N,N'-Methylendiacrylamid und - dimethacrylamid, N,N'-Ethylendiacrylamid und -dimethacrylamid, Polyvinyl- und Polyallylether gesättigter $C_2$-$C_{20}$-Polyole mit 2 bis 4 OH-Gruppen pro Molekül, wie z.B. Ethylenglykoldivinyl- und -diallylether und Diethylenglykoldivinyl- und -diallylether, Ester ungesättigter $C_3$-$C_{12}$-Alkohole oder gesättigter $C_2$-$C_{20}$-Polyole mit 2 bis 4 OH-Gruppen pro Molekül wie Allylmethacrylat, Ethylenglykoldi(meth)acrylat, Glycerintri(meth)acrylat, Pentaerythrittetra(meth)acrylat, Divinylethylenharnstoff, Divinylpropylenharnstoff, Divinyladipat, aliphatische und cycloaliphatische Olefine mit 2 oder 3 isolierten C=C-Doppelbindungen wie Hexadien-1,5, 2,5-Dimethylhexadien-1,5, Octadien-1,7, 1,2,4-Trivinylcyclohexan. Als vernetzende Monomere haben sich Divinylbenzol (als Isomerengemisch) sowie Mischungen aus Divinylbenzol und aliphatischen $C_6$-$C_{12}$-Kohlenwasserstoffen mit 2 oder 3-C=C-Doppelbindungen besonders bewährt. Die vernetzenden Monomeren werden im allgemeinen in Mengen von 2 bis 20 Gew.-%, vorzugsweise 2 bis 12 Gew.-%, bezogen auf die Gesamtmenge der eingesetzten polymerisierbaren Monomeren, eingesetzt.

Die vernetzenden Monomeren müssen nicht in reiner Form, sondern können auch in Form ihrer technisch gehandelten Mischungen minderer Reinheit (wie z.B. Divinylbenzol in Mischungen mit Ethylstyrol) eingesetzt werden.

Für die Herstellung der die primären Amino-Gruppen enthaltenden, schwach basischen Anionenaustauscher aus den vernetzten Vinylaromat-Polymerisaten kann man das Chlormethylierungsverfahren mit anschließender Aminierung oder das Aminomethylierungsverfahren mit anschließender Verseifung verwenden. Die genannten Herstellverfahren sind bekannt. Nach dem bevorzugten Aminomethylierungsverfahren setzt man vernetzte Vinylaromatpolymerisate mit reaktionsfähigen Phthalimidderivaten, wie beispielsweise N-Chlormethylphthalimid, um und hydrolysiert die resultierenden Phthalimido-Verbindungen zu den entsprechenden primären Aminen. Die primären Amino-Gruppen tragenden vernetzten Vinylaromat-Polymerisate stellen die Edukte für das erfindungsgemäße Verfahren dar. Sie enthalten 0,5 bis 1,5 Amino-Gruppen, vorzugsweise 0,5 bis 1,2 Amino-Gruppen pro aromatischem Kern. Die Edukte können gelförmig oder makroporös sein, bevorzugt sind makroporöse Edukte.

Das erfindungsgemäße Verfahren wird wie folgt durchgeführt:

Der die primären Amino-Gruppen tragende, schwachbasische Anionenaustauscher (=Edukt) wird unter Rühren in Wasser suspendiert. In der Regel wird man das Wasser vor der Zugabe des Eduktes oder vorzugsweise die Suspension des Eduktes in Wasser auf die beabsichtigte Reaktionstemperatur aufheizen. Der anspruchsgemäße Bereich der Reaktionstemperatur des erfindungsgemäßen Verfahrens liegt bei 70 bis 110°C, vorzugsweise 80 bis 100°C. Reaktionstemperaturen kleiner 70°C beziehungsweise größer 110°C sind zu vermeiden, da Nebenreaktionen einen reproduzierbaren Reaktionsablauf und damit eine exakt einstellbare Produktqualität in Bezug auf den Gehalt der Iminoessigsäure-Einheiten der Struktur (I) und (II) sowie einen optimalen Umsatz bezogen auf die Monochloressigsäure und/oder des Alkali-Salzes der Monochloressigsäure verhindern. Bei Erreichen der Reaktionstemperatur wird die Monochloressigsäure und/oder das Alkali-Salz der Monochloressigsäure, vorzugsweise Monochloressigsäure, kontinuierlich in einer Geschwindigkeit zudosiert, die eine zuverlässige Temperaturkontrolle zuläßt. Dabei wird gleichzeitig während des gesamten Reaktionsverlaufes durch kontinuierliche Zudosierung einer anorganischen Base, bevorzugt Natronlauge, der pH-Wert ständig im anspruchsgemäßen Bereich von 7 bis 11, vorzugsweise 8 bis 10 gehalten. Um einen reproduzierbaren Herstellprozeß sicher zu gewährleisten, ist es vorteilhaft, die Monochloressigsäure und/oder das Alkali Salz der Monochloressigsäure und die Natronlauge in einem Zeitraum von 3 bis 8 Stunden im anspruchsgemäßen Bereich der Reaktionstemperatur und des pH-Wertes zu dosieren und anschließend 3 bis 6 Stunden bei derselben Reaktionstemperatur und demselben pH-Wert nachzurühren, so daß die Gesamtreaktionszeit 6 bis 14 Stunden beträgt. Erfindungsgemäß werden die Monochloressigsäure und die Natronlauge in einem konstanten Massenverhältnis zueinander kontinuierlich im anspruchsgemäßen Bereich der Reaktionstemperatur und des pH-Wertes unter Rühren zu der Suspension des Eduktes zudosiert. Dieses kann bei Reaktionsansätzen im technischen Maßstab zur optimalen Durchmischung durch gleichzeitiges Eindosieren von Monochloressigsäure und Natronlauge in einem Umpumpkreislauf (Loop), der ständig den im Reaktor befindlichen Reaktionsansatz umpumpt, erfolgen.

pH-Werte kleiner 7 und größer 11 sind während des gesamten Reaktionsverlaufes zu vermeiden, da ansonsten ein reproduzierbarer Reaktionsablauf und damit eine exakt einstellbare Produktqualität in Bezug auf den Gehalt der Iminoessigsäure-Einheiten der Formeln (I) und (II) sowie ein optimaler Umsatz bezogen auf die Monochloressigsäure und/oder des Alkali-Salzes der Monochloressigsäure verhindert wird.

Die Gesamtmenge der im erfindungsgemäßen Verfahren eingesetzten Monochloressigsäure und/oder des Alkalisalzes der Monochloressigsäure beträgt 1,40 bis 2,85 Mol, vorzugsweise 1,65 bis 2,80 Mol pro Mol primärer Amino-Gruppen im Edukt. Die Gesamtmenge der zuzusetzenden anorganischen Base, vorzugsweise Natronlauge, beträgt im erfindungsgemäßen Verfahren in der Regel 2 bis 2,2 Mol pro Mol Monochloressigsäure und/oder 0,95 bis 1,05 Mol pro Mol Alkali-Salz der Monochloressigsäure.

Nach der Umsetzung liegt das Chelatharz in der Alkali-(vorzugszweise Na-Form) vor und kann in bekannter Weise durch Umladen mit anorganischen Säure, vorzugsweise verdünnte Schwefelsäure in die H-Form überführt werden.

Der Umsetzungsgrad der Monochloressigsäure und/oder des Alkali-Salzes der Monochloressigsäure, definiert als Verhältnis der Mole der im Chelataustauscher befindlichen schwachsauren Gruppen (Essigsäure-Gruppen) zu den eingesetzten Molen an Monochloressigsäure und/oder des Alkali-Salzes der Monochloressigsäure beträgt im erfindungsgemäß ausgeübten Verfahren 0,70 bis 1,00, bzw. 70 bis 100 %, vorzugsweise 0,70 bis 0,90, bzw. 70 bis 90 %.

Der Anteil an schwachsauren Gruppen im Chelataustauscher läßt sich beispielsweise durch titrimetrische Verfahren bestimmen. Der Anteil der Iminodiessigsäure-Gruppen gemäß Formel (II) bezogen auf den Gesamtanteil der Iminoessigsäure Einheiten gemäß der Formeln (I) und (II) beträgt in den nach dem erfindungsgemäßen Verfahren hergestellten Chelataustauschern 40 bis 100 Mol%, vorzugsweise 50-100 Mol%. Der Substitutionsgrad der primären Amino-Gruppen, d.h. das Verhältnis schwachsaurer Gruppen (Essigsäure-Gruppen) zum Stickstoff-Gehalt im Chelataustauscher wird durch das sogenannte TK/N-Verhältnis beschrieben. DasTK/N-Verhältnis ist eine dimensionslose Zahl, die wie folgt definiert ist:

$$\frac{\text{Totalkapazität der H-Form [Mol/l] x Molgewicht Stickstoff [g/Mol] x 100 \%}}{\text{Trockengewicht [g/l] x Gehalt Stickstoff [Gew.-\%]}}$$

So beträgt das TK/N-Verhältnis von Chelataustauschern, die ausschließlich Aminoessigsäure-Gruppen gemäß der Formel (I) enthalten, 1; bei Chelataustauschern, die ausschließlich Iminodiessigsäure-Gruppen gemäß der Formel (II) enthalten, 2.

Bei den nach dem erfindungsgemäßen Verfahren hergestellten Chelataustauscher beträgt dasTK/N-Verhältnis 1,4 bis 2,0, vorzugsweise 1,5 bis 1,95.

Die über das erfindungsgemäße Verfahren hergestellten Chelatharze zeichnen sich durch eine ausgezeichnete osmotische Stabilität (Quellungsstabilität) aus.

## Beispiele

### Beispiel 1 (erfindungsgemäß):

600 ml eines schwachbasischen, makroporösen Anionenaustauschers, der 1,45 Mol primäre Amino-Gruppen enthält, wird unter Rühren zu einer Vorlage von 600 g entionisiertem Wasser gegeben. Die Suspension wird auf eine Temperatur von 98°C erhitzt und bei dieser Temperatur 325 g (2,75 Mol) einer 80%igen Monochloressigsäure (wäßrig) und 490 g (5,5 Mol) einer 45%igen Natronlauge über 4 Stunden simultan zudosiert, wobei der pH-Wert während der gesamten Reaktionszeit bei 10 gehalten wird. Anschließend wird der Reaktionsansatz noch 4 Stunden bei 98°C nachgerührt. Das Produkt wird abfiltriert und anschließend mit entionisiertem Wasser gewaschen.

Ausbeute: 1080 ml Chelatharz (Na-Form)

### Beispiel 2 (erfindungsgemäß):

Man verfährt gemäß Beispiel 1, führt die Reaktion aber bei einer Temperatur von 90°C durch.

Ausbeute: 1080 ml Chelatharz (Na-Form)

### Beispiel 3 (Vergleich):

Man verfährt gemäß Beispiel 1, führt die Reaktion aber bei einer Temperatur von 60°C durch. Der Verbrauch an 45%iger Natronlauge beträgt 410 g.

Ausbeute: 990 ml Chelatharz (Na-Form)

### Beispiel 4 (erfindungsgemäß):

600 ml eines schwachbasischen, makroporösen Anionenaustauschers, der 1,45 Mol primäre Amino-Gruppen enthält, wird unter Rühren zu einer Vorlage von 600 g entionisiertem Wasser gegeben. Die Suspension wird auf eine Temperatur von 90°C erhitzt und bei dieser Temperatur 321 g (2,75 Mol) Natriummonochloracetat und 243 g (2,73 Mol) einer 45%igen Natronlauge über 4 Stunden simultan zudosiert, wobei der pH-Wert während der gesamten Reaktionszeit bei 10 gehalten wird. Anschließend wird der Reaktionsansatz noch 4 Stunden bei 90°C nachgerührt. Das Produkt wird abfiltriert und anschließend mit entionisiertem Wasser gewaschen.

Ausbeute: 1080 ml Chelatharz (Na-Form)

### Beispiel 5 (Vergleich):

Man verfährt gemäß Beispiel 4, führt die Reaktion aber bei einem pH-Wert von 12 durch. Der Verbrauch an 45%iger Natronlauge beträgt 238 g.

Ausbeute: 950 ml Chelatharz (Na-Form)

### Beispiel 6 (erfindungsgemäß):

600 ml eines schwachbasischen, makroporösen Anionenaustauschers, der 1,36 Mol primäre Amino-Gruppen enthält, wird unter Rühren zu einer Vorlage von 600 g entionisiertem Wasser gegeben. Die Suspension wird auf eine Temperatur von 85°C erhitzt und bei dieser Temperatur 385 g (3,27 Mol) einer 80%igen Monochloressigsäure (wäßrig) und 582 g (6,55 Mol) einer 45%igen Natronlauge über 4 Stunden simultan zudosiert, wobei der pH-Wert während der gesamten Reaktionszeit bei 10 gehalten wird. Anschließend wird der Reaktionsansatz noch 4 Stunden bei 85°C nachgerührt. Das Produkt wird abfiltriert und anschließend mit entionisiertem Wasser gewaschen.

Ausbeute: 1300 ml Chelatharz (Na-Form)

Zur Umladung in die H-Form werden 600 ml des Chelatharzes in der Na-Form in eine Säule eingefüllt und von oben mit 5,40 kg einer 10 Gew.-%igen Schwefelsäure beaufschlagt. Anschließend wird mit 10 kg entionisiertem Wasser gewaschen.
Ausbeute: 400 ml Chelatharz (H-Form)

### Beispiel 7 (Vergleich):

Man verfährt gemäß Beispiel 6, führt die Reaktion aber bei einem pH-Wert von 12 durch. Der Verbrauch an 45%iger Natronlauge beträgt 574 g.

Ausbeute: 1050 ml Chelatharz (Na-Form)

**Tabelle**

| Beispiele | Totalkapazität Na-Form in Mol/l | Totalkapazität H-Form in Mol/l | TK/N-Verhältnis | Umsetzungsgrad bzgl. Monochloressigsäure in % | Quellungsstabilität in % perfekte Perlen |
|---|---|---|---|---|---|
| 1 | 2,10 | 2,80 | 1,60 | 82 | 97 |
| 2 | 2,00 | 2,70 | 1,55 | 79 | 97 |
| 3 (Vergleich) | 1,85 | 2,40 | 1,35 | 66 | 91 |
| 4 | 2,05 | 2,73 | 1,60 | 81 | 96 |
| 5 (Vergleich) | 1,60 | 2,05 | 1,15 | 55 | 80 |
| 6 | 2,05 | 3,15 | 1,90 | 82 | 95 |
| 7 (Vergleich) | 1,70 | 2,55 | 1,55 | 55 | 82 |
| | | | | | |

Bestimmung der Quellungsstabilität:

In eine Säule werden 25 ml des Chelatharzes eingefüllt. Nacheinander werden 4 Gew.-% wäßrige Natronlauge, entionisiertes Wasser, 6 Gew.-% Salzsäure und entionisiertes Wasser beaufschlagt, wobei die Natronlauge und die Salzsäure von oben durch das Harz fließen und das entionisierte Wasser von unten durch das Harz gepumpt wird. Die Elution erfolgt zeitgetaktet über ein Steuergerät, wobei 20 Arbeitszyklen nach 20 Stunden beendet sind. Nach Ende der Arbeitszyklen werden 100 Perlen mikroskopisch beurteilt und die Anzahl der perfekten Perlen ermittelt.

**Bestimmung des Umsetzungsgrades bzgl. Monochloressigsäure:**

$$\frac{\text{Totalkapazität Na-Form [Mol/l] x Ausbeute Na-Form [1]}}{\text{Mol eingesetzte Monochloressigsäure/Na-monochloracetat}} \text{ x } 100\%$$

**Bestimmung des TK/N-Verhältnisses:**

$$\frac{\text{Totalkap. H-Form [Mol/l] x Molgewicht Stickstoff [g/Mol] x } 100\%}{\text{Trockengewicht [g/l] x Gehalt Stickstoff [Gew.-\%]}} = \textbf{TK/N}$$

Die in der Tabelle aufgeführten Ergebnisse zeigen, daß nur im beanspruchten Bereich des pH-Wertes (Beispiel 4 und 6 im Vergleich zu Beispiel 5 und 7) und im beanspruchten Bereich der Reaktionstemperatur (Beispiel 1 und 2 im Vergleich zu Beispiel 3) ein hoher Umsetzungsgrad bezogen auf die Monochloressigsäure/Natriummonochloracetat erzielt werden kann.

Die nach dem erfindungsgemäßen Verfahren hergestellten Selektiv- bzw. Chelataustauscher weisen eine verbesserte Quellungsstabilität auf (Beispiel 1,2, 4 und 6 im Vergleich zum Beispiel 3, 5 und 7).

## Patentansprüche

1. Verfahren zur Herstellung von Selektivaustauschem mit Iminoessigsäure-Einheiten der allgemeinen Formeln (I) und (II)

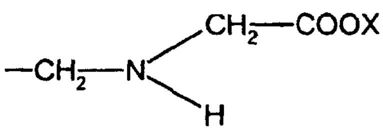

(I)

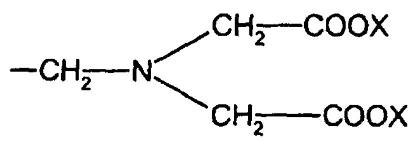

(II)

worin

X für Wasserstoff oder ein Alkali-Ion steht, auf Basis vernetzter Vinylaromat-Polymerisate durch Umsetzung eines primäre Aminogruppen tragenden, schwach basischen Anionentauschers mit Monochloressigsäure und/oder einem Alkali-Salz der Monochloressigsäure, **dadurch gekennzeichnet, daß** man die schwach basischen Anionenaustauscher bei 70 bis 110°C und einem pH-Wert von 7 bis 11 reagieren läßt, wobei pro Mol primärer Amino-Gruppen 1,40 bis 2,85 Mol Monochloressigsäure und/oder eines Alkali-Salzes der Monochloressigsäure eingesetzt werden und die Monochloressigsäure und die Natronlauge in einem konstanten Molverhältnis zueinander kontinuierlich zu der Suspension des Eduktes dosiert werden.

2. Verfahren gemäß Anspruch 1, **dadurch gekennzeichnet, daß** X jeweils für Wasserstoff, Natrium und/oder Kalium steht.

3. Verfahren gemäß der Ansprüche 1 und 2, **dadurch gekennzeichnet, daß** man den pH-Wert durch kontrollierte Zugabe von Natronlauge einstellt.

4. Verfahren gemäß der Ansprüche 1 bis 3, **dadurch gekennzeichnet, daß** der Umsetzungsgrad der Monochloressigsäure und/oder eines Salzes der Monochloressigsäurc mit den primären Amino-Gruppen im Bereich von 0,7 bis 1,00, bzw. 70 - 100 % liegt.

## Claims

1. A process for the production of selective ion exchangers having iminoacetic acid units of the general formulae (I) and (II)

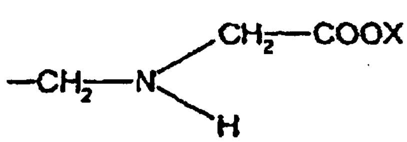

(I)

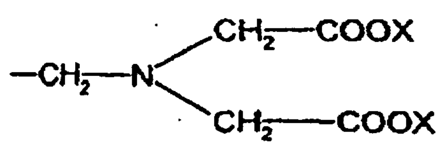

(II)

in which

X denotes hydrogen or an alkali metal ion, on the basis of crosslinked vinyl-aromatic polymers by reaction of a weakly basic anion exchanger bearing primary amino groups with monochloroacetic acid and/or an alkali metal salt of monochloroacetic acid, **characterised in that** the weakly basic anion exchanger is reacted at 70 to 110°C and a pH value of 7 to 11, wherein 1.40 to 2.85 mol of monochloroacetic acid and/or of an alkali metal salt of monochloroacetic acid are used per mol of primary amino groups and the monochloroacetic acid and the sodium hydroxide solution are continuously apportioned in a constant molar ratio to one another to the suspension of the educt.

**2.** A process according to claim 1, **characterised in that** X in each case denotes hydrogen, sodium and/or potassium.

**3.** A process according to claims 1 and 2, **characterised in that** the pH value is established by controlled addition of sodium hydroxide solution.

**4.** A process according to claims 1 to 3, **characterised in that** the degree of conversion of the monochloroacetic acid and/or of a salt of monochloroacetic acid with the primary amino groups is in the range from 0.7 to 1.00, or 70-100%.

**Revendications**

**1.** Procédé pour la préparation d'échangeurs sélectifs à motifs d'acide iminoacétique de formules générales (I) et (II)

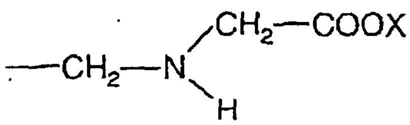

(I)

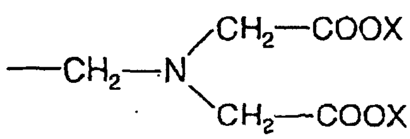

(II)

dans lesquelles

X représente l'hydrogène ou un ion alcalin, à base de polymères réticulés de dérivés vinylaromatiques par réaction d'un échangeur d'anions faiblement basique portant des groupes amino primaires avec l'acide monochloracétique et/ou un sel alcalin de l'acide monochloracétique, **caractérisé en ce que** l'on fait réagir l'échangeur d'anions faiblement basique à des températures de 70 à 110°C et un pH de 7 à 11, et on met en oeuvre, par mole de groupe amino primaire 1,40 à 2,85 mol d'acide monochloracétique et/ou d'un sel alcalin de l'acide monochloracétique, et on ajoute l'acide monochloracétique et la lessive de soude en continu, à un rapport molaire constant entre eux, à la suspension du produit de départ.

**2.** Procédé selon la revendication 1, **caractérisé en ce que** X représente l'hydrogène, le sodium et/ou le potassium.

**3.** Procédé selon les revendications 1 et 2, **caractérisé en ce que** l'on règle le pH par addition contrôlée de lessive de soude.

**4.** Procédé selon les revendications 1 et 3, **caractérisé en ce que** le taux de conversion de l'acide monochloracétique et/ou d'un sel de l'acide monochloracétique avec les groupes amino primaires se situe dans l'intervalle de 0,7 à 1,00 ou respectivement de 70 à 100 %.